# EUROPEAN PATENT APPLICATION

(11) **EP 4 495 157 A1**
(43) Date of publication of application: **22.01.2025**
(21) Application number: 23770836.7
(22) Date of filing: 15.03.2023
(51) Int. Cl.: C08G 59/40, C08J 5/24

(54) **EPOXY RESIN COMPOSITION, PREPREG, AND FIBER-REINFORCED COMPOSITE MATERIAL**

(30) Priority: 18.03.2022 JP 2022043410
(71) Applicant: Toray Industries, Inc., Tokyo 103-8666 (JP)
(72) Inventor: ITO Akihiko, Iyo-gun, Ehime 791-3193 (JP); SAKATA Hiroaki, Nagoya-shi, Aichi 455-8502 (JP)
(74) Representative: Kador & Partner Part mbB
(86) International application number: PCT/JP2023/010073
(87) International publication number: WO 2023/176883

(57) **Abstract**

Disclosed is a resin composition comprising an epoxy resin, wherein a cured resin obtained by curing the epoxy resin composition at a temperature of 180°C for 2 hours exhibits a thermal diffusivity at 25°C as measured in accordance with ASTM E1461-01 (2001) of 0.17 mm²/s or more and less than 0.30 mm²/s, and a char generation rate at 600°C under air of 20% or more and less than 50%. The present invention provides an epoxy resin composition capable of obtaining a cured resin having high char generation effect and thermal conductivity as well as excellent mechanical properties by curing, and a prepreg and a fiber reinforced composite material having excellent fire resistance each using the same.

## Description

### TECHNICAL FIELD

The present invention relates to an epoxy resin composition, a prepreg, and a fiber reinforced composite material having excellent fire resistance.

### BACKGROUND ART

Composite materials comprising carbon or glass fibers as reinforcing fibers, and thermosetting resins such as epoxy or phenol resins as matrix resins are used in a wide range of applications from sports and leisure goods such as fishing rods and tennis and badminton rackets to various industrial equipment, civil engineering and construction, and the aerospace industry. However, since the thermosetting resins used in most composite materials are flammable and can cause fires, there is a need for flame-retardant composite materials in order to prevent accidents caused by ignition and combustion, especially in structural materials for aircrafts, vehicles and the like. In electronic and electrical equipment, there is also a need to make materials flame retardant in order to prevent housing and components from ignition and combustion due to internal heat generation, leading accidents.

Examples of the means for making composite materials flame retardant include a method in which char generation of a matrix resin is promoted to suppress the diffusion of decomposition gases that occur when the resin is thermally decomposed, or a method in which the decomposition of the resin in the early stages of combustion by the heat absorbing effect of an inorganic filler containing a heat absorbing agent.

As the means for promoting char generation of a matrix resin, additives, so-called flame retardants, are often added to make the material less flammable. Phosphorus compounds are commonly used as flame retardants, and several phosphorus compounds are in industrial use. It is considered that phosphorus compounds are converted into polyphosphoric acid has a dehydration carbonization action during combustion, thus promoting char generation. As the flame retardant technology using such phosphorus compounds, there is a technology in which additive type flame retardants such as red phosphorus and a phosphoric acid ester are added to an epoxy resin composition, or a technology in which a reactive flame retardant which contains phosphorus atoms in the molecule and reacts with a resin is used to introduce phosphorus atoms into a crosslinked structure.

Metal hydroxides are generally used as heat absorbing agents and are in industrial use.

Patent Document 1 reports a technology for obtaining a cured resin, which has excellent viscosity stability and a char generation promoting effect and also has excellent mechanical properties, by a flame retardant technology that uses a resin composition comprising a reactive diluent having a specific structure and an amine-based curing agent containing phosphorus atoms having a specific structure.

Patent Document 2 reports a technique for obtaining a fire-resistant resin comprising an epoxy resin containing phosphorus atoms having a specific structure.

Patent Document 3 reports a technique for obtaining a flame-retardant resin comprising a specific epoxy resin, red phosphorus and aluminum hydroxide, and a fire-resistant fiber reinforced composite material using the same.

### PRIOR ART DOCUMENTS

### PATENT DOCUMENTS

Patent Document 1: JP 2019-082595 A1
Patent Document 2: JP 2016-510355 A
Patent Document 3: WO 2021/153644 A1

### SUMMARY OF THE INVENTION

### PROBLEMS TO BE SOLVED BY THE INVENTION

In structural materials for aircrafts, vehicles and the like, it is advantageous to reduce the thickness of the materials in order to meet the demand for reducing fuel consumption through weight reduction. However, the thinner the material is, the easier it is for the flame to spread in the vertical direction of the material during combustion. When using the phosphorus-based flame retardants and inorganic fillers mentioned in the above patent documents, it was difficult to obtain sufficient fire resistance in thin materials.

An object of the present invention is to provide an epoxy resin composition capable of obtaining a fiber reinforced composite material having excellent mechanical properties and excellent fire resistance, and a prepreg and a fiber reinforced composite material each using the same.

### SOLUTIONS TO THE PROBLEMS

In the present invention, it has been found that by using a cured resin having high char generation promoting effect and thermal conductivity as a matrix resin of a fiber reinforced composite material, it is possible to provide a fiber reinforced composite material having excellent fire resistance and mechanical properties due to the synergistic effect of suppressing the diffusion of decomposition gases and promoting heat dissipation in the thickness direction.

The epoxy resin composition of the present invention is a resin composition comprising an epoxy resin, wherein a cured resin obtained by curing the epoxy resin composition at a temperature of 180°C for 2 hours exhibits a thermal diffusivity at 25°C as measured in accordance with ASTM E1461-01(2001) of 0.17 mm²/s or more and less than 0.30 mm²/s, and a char generation rate at 600°C under air of 20% or more and less than 50%.

It is preferable that such epoxy resin composition comprises, as a component other than the epoxy resin, an inorganic filler made of boron nitride or graphite.

The prepreg of the present invention is a prepreg obtained by impregnating a reinforcing fiber with the above epoxy resin composition.

Furthermore, the fiber reinforced composite material of the present invention is a fiber reinforced composite material obtained by curing the above prepreg, or a fiber reinforced composite material comprising a cured resin obtained by curing the above epoxy resin composition and a reinforcing fiber, and the fiber reinforced composite material has a thickness of 0.5 mm or more and less than 2 mm.

### EFFECTS OF THE INVENTION

According to the present invention, it becomes possible to provide an epoxy resin composition capable of obtaining a cured resin having high char generation effect and thermal conductivity as well as excellent mechanical properties by curing, and a prepreg using the same. It also becomes possible to provide a fiber reinforced composite material having excellent mechanical properties and fire resistance.

### EMBODIMENTS OF THE INVENTION

Regarding the epoxy resin composition in the present invention, a cured resin obtained by curing the epoxy resin composition at a temperature of 180°C for 2 hours exhibits a thermal diffusivity at 25°C of 0.17 mm²/s or more and less than 0.30 mm²/s. When the thermal diffusivity is within this range, heat dissipation in the thickness direction is sufficiently promoted, thus making it possible to obtain a fiber reinforced composite material having excellent fire resistance. Here, the thermal diffusivity refers to the thermal diffusivity in the thickness direction when the cured resin is measured in accordance with ASTM Standard E1461-01(2001). The lower limit of the thermal diffusivity is preferably 0.18 mm²/s or more, and more preferably 0.19 mm²/s or more. Most preferably, the thermal diffusivity is 0.20 mm²/s or more and less than 0.30 mm²/s.

Regarding the epoxy resin composition of the present invention, the obtained cured resin exhibits a char generation rate at 600°C under air of 20% or more and less than 50%. When the char generation rate is within this range, the thermal diffusion of the decomposition gas is sufficiently suppressed, thus making it possible to obtain a fiber reinforced composite material having excellent fire resistance. Here, the char generation rate at 600°C under air refers to the remaining rate of the thermal decomposition residue upon reaching 600°C when the cured resin is heated under an air atmosphere from room temperature at a temperature rise rate of 10°C/min using a thermogravimetric analyzer. The lower limit of the char generation rate is preferably 25% or more, and more preferably 30% or more. Most preferably, the char generation rate is 35% or more and less than 50%.

In this way, when using the resin composition having both high thermal diffusivity and high char generation rate of the cured resin as a matrix resin of a fiber reinforced composite material, it is possible to obtain a synergistic effect between the effect of suppressing the thermal diffusion of decomposition gases by promoting char generation and the heat dissipation effect in the thickness direction, leading to an improvement in fire resistance of the fiber reinforced composite material.

Furthermore, the fiber reinforced composite material of the present invention is a fiber reinforced composite material comprising a cured epoxy resin and reinforcing fibers, in which the cured resin exhibits a thermal diffusivity at 25°C as measured in accordance with ASTM E1461-01(2001) of 0.17 mm²/s or more and less than 0.30 mm²/s, and a char generation rate at 600°C under air of 20% or more and less than 50%, and the fiber reinforced composite material has a thickness of 0.5 mm or more and less than 2 mm.

In structural members for aircrafts, vehicles and the like, it is necessary to reduce the thickness of the materials for weight reduction. However, when the thickness is reduced, there is concern that the flame tends to spread in the vertical direction in a vertical combustion test required for structural members. In contrast, the fiber reinforced composite material of the present invention has excellent heat dissipation effect in the thickness direction, thus making it possible to exert the effect of improving fire resistance even when the material has a thickness within the above range.

It is preferable that the epoxy resin composition in the present invention comprises, in addition to the epoxy resin, inorganic fillers made of boron nitride or graphite as the component [A].

Of both inorganic fillers, the inorganic filler made of graphite is more preferable. The addition of such inorganic filler improves the thermal conductivity of the resin.

Specific examples of the component [A] include flake boron nitride, spherical graphite, vein graphite and flake graphite. Of these, flake graphite is particularly preferable since it is highly graphitized and has high thermal conductivity. Boron nitride and graphite of the component [A] may be used alone as the inorganic filler, or both of them may be used in combination. It is also possible to use a mixture of two or more types of boron nitride, graphite, or a combination of both.

The volume-average particle size of the component [A] in the present invention, as determined by a particle size distribution analyzer using a laser diffraction method, is preferably 10 nm to 100 um from the point of obtaining high thermal conductivity and mechanical properties, and more preferably 1 um to 20 µm.

The content of the component [A] in the present invention is preferably 0.5% by mass to 50% by mass of the entire epoxy resin composition from the point of obtaining high thermal conductivity and mechanical properties, and more preferably 1% by mass to 10% by mass.

It is preferable that the epoxy resin composition of the present invention further comprises, as the component [B], at least one amine-based curing agent selected from the group consisting of an amine-based curing agent having a structure represented by the following general formula (1), an amine-based curing agent having a structure represented by the following general formula (2) and an amine-based curing agent having a structure represented by the following general formula (3). The addition of such amine-based curing agents to the epoxy resin composition promotes char generation. It also functions as a curing agent for an epoxy resin, thus obtaining a cured product with high degree of curing.

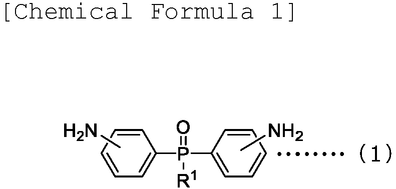

In the general formula (1), R¹ represents a hydrocarbon group having 1 to 4 carbon atoms.

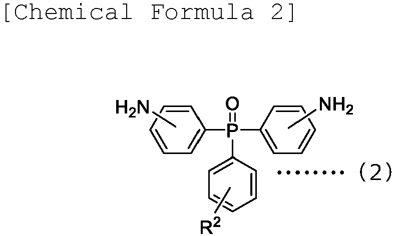

In the general formula (2), R² represents a hydrogen atom or an amino group.

In the general formula (1), when the number of carbon atoms of R¹ decreases, the hydrophobicity of the amine-based curing agent having a structure represented by the general formula (1) deteriorates, so that the moisture absorption resistance of the obtained cured resin material may deteriorate. Therefore, the number of carbon atoms of R¹ is preferably 4.

Examples of the hydrocarbon group having 1 to 4 carbon atoms include a methyl group, an ethyl group, an n-propyl group, an isopropyl group, an n-butyl group, a sec-butyl group, an isobutyl group, a tert-butyl group and the like.

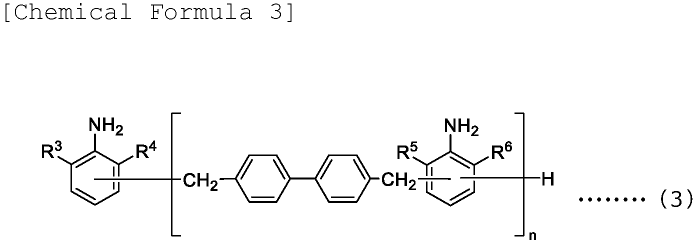

In the general formula (3), R³ to R⁶ each represent one selected from a hydrogen atom and an aliphatic hydrocarbon group having 1 to 4 carbon atoms, n represents 1 to 4.

Examples of the aliphatic hydrocarbon group having 1 to 4 carbon atoms include a methyl group, an ethyl group, an n-propyl group, an isopropyl group, an n-butyl group, a sec-butyl group, an isobutyl group, a tert-butyl group and the like.

In the general formula (3), when the number of carbon atoms of R³ to R⁶ increases, the molecular chain of the aliphatic hydrocarbon group becomes longer, which may cause deterioration of the flame retardancy and mechanical properties of the cured resin or fiber reinforced composite material obtained by curing the epoxy resin composition of the present invention. Therefore, R³ to R⁶ are preferably a hydrogen atom or a group having one carbon atom, that is, a methyl group. It is not necessary that R³ to R⁶ are all the same.

Examples of the amine-based curing agent having a structure represented by the general formula (1) as the component [B] in the present invention include bis(4-aminophenyl)ethylphosphine oxide, bis(3-aminophenyl)ethylphosphine oxide, bis(2-aminophenyl)ethylphosphine oxide, bis(4-aminophenyl)n-propylphosphine oxide, bis(3-aminophenyl)n-propylphosphine oxide, bis(4-aminophenyl)isopropylphosphine oxide, bis(3-aminophenyl)isopropylphosphine oxide, bis(4-aminophenyl)n-butylphosphine oxide, bis(3-aminophenyl)n-butylphosphine oxide, bis(4-aminophenyl)isobutylphosphine oxide, bis(3-aminophenyl)isobutylphosphine oxide and the like.

Examples of the amine-based curing agent having a structure represented by the general formula (2) include tris(4-aminophenyl)phosphine oxide, tris(3-aminophenyl)phosphine oxide, tris(2-aminophenyl)phosphine oxide, bis(4-aminophenyl)phenylphosphine oxide, bis(3-aminophenyl)phenylphosphine oxide and the like.

Examples of the amine-based curing agent having a structure represented by the general formula (3) include biphenylaralkyl type aromatic amine (BAN, manufactured by Nippon Kayaku Co., Ltd.) in which R³ to R⁶ are hydrogen atoms, and a biphenylaralkyl type aromatic amine (BXN, manufactured by Nippon Kayaku Co., Ltd.) in which R³ to R⁶ are methyl groups.

Of these, tris(3-aminophenyl)phosphine oxide or bis(3-aminophenyl)phenylphosphine oxide is preferably used because of its excellent mechanical properties and heat resistance. Of these two compounds, the latter is more preferably used.

The content of the component [B] in the present invention is preferably 10 to 100 parts by mass, and more preferably 25 to 100 parts by mass, based on 100 parts by mass of the total amount of the epoxy resin, from the point of ensuring the viscosity stability of the resin composition and the flame retardancy and mechanical properties of the resulting cured product and fiber reinforced composite material.

In the present invention, when using an amine-based curing agent having a structure represented by the above general formula (1) or (2) as the component [B], the content of phosphorus atoms in the epoxy resin composition is preferably 0.1 to 5.0% by mass since it is possible to achieve both flame retardancy and mechanical properties of the resulting cured product and fiber reinforced composite material. The content of phosphorus atoms is preferably 0.3 to 4.0% by mass. The content of phosphorus atoms (% by mass) as used herein is determined by mass (g) of phosphorus atoms in the entire epoxy resin composition/mass (g) of the entire epoxy resin composition × 100. The mass of phosphorus atoms can be obtained by determining the mass of phosphorus atoms per molecule of the compound of the component [B] from atomic weight of phosphorus atoms, and multiplying this by the number of molecules of the compound of the component [B] included in the entire epoxy resin composition, calculated from the number of mols.

The epoxy resin composition of the present invention may comprise a curing agent other than the above component [B]. The curing agent as used herein is a curing agent for an epoxy resin, and is a compound having an active group capable of reacting with the epoxy group. Examples of the curing agent other than component [B] include dicyandiamide, aromatic polyamines, aminobenzoic acid esters, various acid anhydrides, phenol novolac resins, cresol novolac resins, polyphenol compounds, imidazole derivatives, aliphatic amines, tetramethylguanidine, thiourea adduct amines, carboxylic acid anhydrides such as methylhexahydrophthalic anhydride, carboxylic acid hydrazides, carboxylic acid amides, polymercaptans, and Lewis acid complexes such as boron trifluoride ethylamine complex. Of these, when using aromatic polyamines as the curing agent, it becomes easier to obtain a cured epoxy resin having satisfactory heat resistance. In particular, when using various isomers of diaminodiphenyl sulfones such as 4,4'-diaminodiphenyl sulfone and 3,3'-diaminodiphenyl sulfone, among aromatic polyamines, it becomes easier to obtain a cured epoxy resin having satisfactory heat resistance.

The content of the curing agent other than the component [B] is preferably 90 parts by mass or less based on 100 parts by mass of the total amount of the curing agents including the component [B] and the curing agents other than the component [B] since it becomes easier to ensure the flame retardancy of the resulting cured product and fiber reinforced composite material.

The epoxy resin composition of the present invention may comprise, as the component [C], a bifunctional glycidylamine type epoxy resin in order to impart excellent flame retardancy and mechanical properties to the resulting cured resin. Of these, aniline-based compounds are preferably used. It is particularly preferable to use an epoxy resin component [C] represented by the following general formula (4) as the aniline-based compounds since it is possible to obtain a cured resin having excellent heat resistance, flame retardancy and mechanical properties.

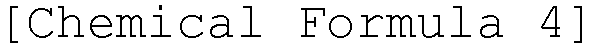

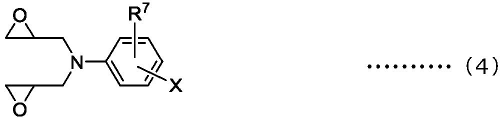

In the general formula (4), R⁷ represents one selected from a hydrogen atom, a hydrocarbon group having 1 to 4 carbon atoms, a halogen atom, an acyl group, a trifluoromethyl group and a nitro group. X represents a hydrogen atom or a substituent having a four- or more-membered ring structure. Examples of the substituent having a four- or more-membered ring structure include a phenyl group, a 1-naphthyl group, a 2-naphthyl group, a phenoxy group, a 1-naphthoxy group, a 2-naphthoxy group, a biphenyl group, a phenylsulfonyl group, a benzyl group and the like. When R⁷ is an aliphatic hydrocarbon group, highly flammable methylene groups increases as the number of carbon atoms increases. Therefore, from the viewpoint of the flame retardancy, R⁷ is preferably a hydrogen atom or a methyl group. Similarly, from the viewpoint of the flame retardancy, R⁷ is also preferably a halogen atom such as Br or Cl. X is preferably a substituent having one benzene ring from the viewpoint that the viscosity of the resin composition increases as the number of carbon atoms increases, thus making it difficult to handle, and from the viewpoint of the flame retardancy.

Specific examples of the component [C] include monoamine type epoxy resins such as N,N-diglycidylaniline, N,N-diglycidyl-o-toluidine, N,N-diglycidyl-m-toluidine, N,N-diglycidyl-p-toluidine, N,N-diglycidyl-2,3-xylidine, N,N-diglycidyl-2,4-xylidine, N,N-diglycidyl-3,4-xylidine and N,N-diglycidyl-4-phenoxyaniline. Of these, N,N-diglycidylaniline and N,N-diglycidyl-4-phenoxyaniline are particularly preferable because of their excellent flame retardancy and mechanical properties. These epoxy resins of the component [C] may be used alone or in combination of two or more thereof.

The content of the component [C] in the present invention is preferably 10 to 60 parts by mass based on 100 parts by mass of the total amount of the epoxy resin from the viewpoint of ensuring excellent heat resistance and mechanical properties. More preferably, the content is 25 to 40 parts by mass.

The epoxy resin composition of the present invention may comprise the following epoxy resins other than the component [C]. First, examples of the bi- or less-functional glycidyl ether type epoxy resins include bisphenol type epoxy resins such as a bisphenol A type epoxy resin, a bisphenol F type epoxy resin, a bisphenol AD type epoxy resin and a bisphenol S type epoxy resin, epoxy resins having a biphenyl backbone, epoxy resins having a naphthalene backbone and epoxy resins having a dicyclopentadiene backbone. Next, examples of trifunctional epoxy resins include aminophenol type epoxy resins such as N,N,O-triglycidyl-m-aminophenol, N,N,O-triglycidyl-p-aminophenol and N,N,O-triglycidyl-4-amino-3-methylphenol. Examples of tetrafunctional epoxy resins include diamine type epoxy resins such as N,N,N',N'-tetraglycidyl-4,4'-diaminodiphenylmethane, N,N,N',N'-tetraglycidyl-2,2'-diethyl-4,4'-diaminodiphenylmethane and N,N,N',N'-tetraglycidyl-m-xylylenediamine.

The epoxy resin composition of the present invention may further comprise, as a component [D], a thermoplastic resin that is soluble in the epoxy resin composition for the purpose of controlling the tackiness of the resulting prepreg, controlling the fluidity of the resin when reinforcing fibers are impregnated with the epoxy resin composition, and imparting the toughness to the resulting fiber reinforced composite material. The thermoplastic resin as the component [D] is preferably a thermoplastic resin having a polyaryl ether backbone. Specific examples thereof include polysulfone, polyphenylsulfone, polyethersulfone, polyetherimide, polyphenylene ether, polyether ether ketone and polyether ether sulfone. These thermoplastic resins having a polyaryl ether backbone may be used alone or in combination as appropriate. Of these, polyethersulfone and polyetherimide are preferably used since they can impart the toughness to the resulting fiber reinforced composite material without causing deterioration of the heat resistance and mechanical properties.

The mixing amount of the component [D] in the present invention is preferably 5 to 40 parts by mass, more preferably 10 to 35 parts by mass, and still more preferably 14 to 30 parts by mass, based on 100 parts by mass of the total amount of the epoxy resin. By setting the mixing amount of the component [D] within this range, it is possible to ensure the balance among the viscosity of the epoxy resin, the tackiness of the resulting prepreg and the mechanical properties of the resulting fiber reinforced composite material.

When using the epoxy resin composition of the present invention as a matrix resin for a prepreg, the viscosity of the epoxy resin composition at 80°C is preferably within a range of 0.5 to 200 Pa·s from the viewpoint of the tackiness and drapability of the prepreg. If the viscosity at 80°C is less than 0.5 Pa·s, excessive resin flow is likely to occur during molding of the fiber reinforced composite material, leading to large variations in basis weight of the reinforcing fibers. If the viscosity at 80°C exceeds 200 Pa·s, it becomes difficult to impregnate the reinforcing fibers with the epoxy resin composition when producing a prepreg, and thus voids are likely to occur in the resulting fiber reinforced composite material and a decrease in strength of the fiber reinforced composite material is likely to occur. The viscosity at 80°C as used herein is determined by the following method. That is, using a dynamic viscoelasticity measuring device such as ARES (manufactured by TA Instruments Japan Inc.) and using flat parallel plates having a diameter of 40 mm, the epoxy resin composition is set between the upper and lower plates so that the distance between the plates is 1 mm. After confirming that the temperature has reached 40°C, measurement is performed in torsion mode (angular frequency: 3.14 rad/s) by simply raising the temperature at a temperature rise rate of 1.5°C/min, followed by determination of the complex viscosity η* at the point when the temperature reaches 80°C.

To improve the impact resistance of the resulting fiber reinforced composite material, the epoxy resin composition according to the present invention preferably comprises, as a component [E], particles containing a thermoplastic resin as a main component (thermoplastic resin particles). Such thermoplastic resin particles are insoluble in the epoxy resin composition and remain as particles even after the epoxy resin composition is made into a prepreg and then a fiber reinforced composite material. As used herein, particles containing a thermoplastic resin as a main component refer to particles in which % by mass of the thermoplastic resin is the highest among the components constituting the particles, and also include thermoplastic resin particles made only of the thermoplastic resin.

As the material for the thermoplastic resin particles, polyamide is most preferable, and of these polyamides, polyamide 12, polyamide 6, polyamide 11, polyamide 66, polyamide 6/12 copolymer, and polyamide modified with an epoxy resin into a semi-IPN structure (semi-IPN polyamide) are preferable. By using particles made of the epoxy resin and semi-IPN polyamide, it is possible to impart excellent heat resistance and impact resistance to the prepreg. Here, IPN is an abbreviation for "interpenetrating polymer network", which is a type of polymer blend in which the blend component polymers are crosslinked polymers, and each of the different crosslinked polymers is partially or fully entangled with each other to form a multiple network structure. A semi-IPN has a multiple network formed of a crosslinked polymer and a linear polymer. The semi-IPN thermoplastic resin particles can be obtained, for example, by dissolving a thermoplastic resin and a thermosetting resin in a common solvent, mixing them uniformly, and performing reprecipitation or the like. For example, the semi-IPN polyamide particles can be obtained by the method mentioned in Example 1 of JP 1-104624 A.

The shape of these thermoplastic resin particles may be spherical or non-spherical, or porous. However, spherical particles are preferable embodiments in that they do not reduce the flow property of the resin and therefore have excellent viscoelasticity, have no starting points for stress concentration and impart high impact resistance. It is possible to use, as commercially available polyamide particles, SP-500, SP-10, TR-1, TR-2, 842P-48, 842P-80, "Toraypearl (registered trademark)" TN (all of which are manufactured by Toray Industries, Inc.), "Orgasol (registered trademark)" 1002D, 2001UD, 2001EXD, 2002D, 3202D, 3501D, 3502D (all of which are manufactured by Arkema) and the like. These polyamide particles may be used alone or in combination.

The epoxy resin composition of the present invention may be mixed with components other than those mentioned above, for example, coupling agents, thermosetting resin particles, or inorganic fillers such as silica gel, carbon black, clay, carbon nanotube, graphene, carbon particles and metal powder, unless they impair the effects of the present invention.

The prepreg of the present invention is obtained by impregnating reinforcing fibers with the epoxy resin composition of the present invention. That is, the above-mentioned epoxy resin composition is used as a matrix resin, and this epoxy resin composition is compounded with reinforcing fibers. Preferred examples of reinforcing fibers include carbon fibers, graphite fibers, aramid fibers, glass fibers and the like. Of these, carbon fibers are particularly preferable from the point of the mechanical properties. Examples of commercially available carbon fibers include "TORAYCA (registered trademark)" T700SC-24K, "TORAYCA (registered trademark)" T800SC-24K and "TORAYCA (registered trademark)" T1100GC-24K (all of which are manufactured by Toray Industries, Inc.).

The prepreg can be obtained by various known methods, for example, a wet method, a hot melting method and the like. Of these, the hot melting method is preferable in that it is easy to exert the effects of the present invention.

The hot melting method is a method in which a matrix resin is heated to lower its viscosity without using a solvent and then reinforcing fibers are impregnated with the matrix resin. Examples of the hot melting method include a method in which reinforcing fibers are directly impregnated with a matrix resin having a viscosity lowered by heating, or a method in which a matrix resin is first applied on a release paper or the like to fabricate a release paper sheet with a resin film, which is superimposed on one or both sides of the reinforcing fibers, followed by applying heat and pressure to the sheet to impregnate the reinforcing fibers with the matrix resin.

In the prepreg of the present invention, the basis weight of the reinforcing fibers is preferably 100 to 1,000 g/m². When the basis weight of the reinforcing fibers is less than 100 g/m², it is necessary to increase the number of layers in order to obtain a predetermined thickness in the case of molding a fiber reinforced composite material, which may make the layering process complicated. Meanwhile, when the basis weight of the reinforcing fibers exceeds 1,000 g/m², the drapeability of the prepreg tends to deteriorate. The fiber mass content of the prepreg is preferably 40 to 90% by mass, and more preferably 50 to 80% by mass. When the fiber mass content is less than 40% by mass, since the ratio of resin is too high, it is impossible to take advantage of excellent mechanical properties of the reinforcing fibers, and the amount of heat generated during curing of the fiber reinforced composite material may be too high. When the fiber mass content exceeds 90% by mass, impregnation with the resin will be insufficient and the resulting fiber reinforced composite material may have many voids.

The form of the prepreg of the present invention may be any of a unidirectional (UD) prepreg, a woven fabric prepreg, a nonwoven fabric prepreg such as a sheet molding compound, and the like.

A first embodiment of the fiber reinforced composite material of the present invention is a fiber reinforced composite material obtained by curing the prepreg of the present invention. Such fiber reinforced composite material can be obtained, for example, by laminating the prepreg of the present invention in a predetermined form, and then applying heat and pressure to cure the matrix resin. Here, it is possible to use, as the method for applying heat and pressure, known methods such as an autoclave molding method, a press molding method, a bagging molding method, a wrapping tape method, an internal pressure molding method.

A second embodiment of the fiber reinforced composite material of the present invention is a fiber reinforced composite material comprising a cured resin obtained by curing the epoxy resin composition of the present invention, and reinforcing fibers. Such fiber reinforced composite material can be obtained by a method in which a reinforcing fiber substrate is directly impregnated with a liquid epoxy resin and then cured without using a prepreg. Specifically, such fiber reinforced composite material can be obtained by, for example, a resin transfer molding method, a filament winding method, a pultrusion method, a hand lay-up method or the like.

The thickness of the fiber reinforced composite material of the present invention is 0.5 mm or more and less than 2 mm, and preferably 0.5 mm or more and less than 1 mm. When the thickness of the fiber reinforced composite material is less than 0.5 mm, flames tend to propagate easily in the vertical direction of the material, and the fire resistance tends to deteriorate. Meanwhile, when the thickness is 2 mm or more, the weight of the structural member becomes too large, thus failing to sufficiently reduce the weight of the structural member. When the material is too thick, flames will not propagate easily in the vertical direction even without using the fiber reinforced composite material of the present invention, and the fire resistance of the fiber reinforced composite material of the present invention will not be utilized. That is, the fiber reinforced composite material of the present invention is characterized by having sufficient fire resistance even when its thickness is reduced.

The surface burning length in a JIS T8022 flame propagation test (Method A (surface ignition), flame contact for 50 seconds) of the fiber reinforced composite material of the present invention is preferably 10 mm or more and less than 50 mm. More preferably, it is 10 mm or more and less than 46 mm. The damaged length on back side is preferably 10 mm or more and less than 60 mm. More preferably, it is 10 mm or more and less than 56 mm. The surface burning length as used herein is the maximum length in the vertical direction of the area where the resin has decomposed on the surface on the flame contact side of the measured sample, and this area does not include the soot-covered area. The damaged length on back side as used herein refers to the maximum vertical length of the discolored area on the surface of the measurement sample opposite to the flame contact side. When the surface burning length and damaged length on back side are within these ranges, the vertical propagation of flames is sufficiently suppressed, thus making it possible to exhibit excellent fire resistance as a structural member for aircrafts, vehicles and the like.

The upper and lower limits of the numerical ranges mentioned above can be combined arbitrarily.

### EXAMPLES

The present invention will be illustrated below by way of Examples, but the present invention is not limited thereto.

The materials used in Examples and Comparative Examples are shown below.

### <Component [A]: Boron Nitride or Graphite>

Flake boron nitride (Platelets 003, manufactured by 3M Japan Limited)
Flake graphite (BF-3AK (volume-average particle size: 3 um), manufactured by Chuetsu Graphite Works Co., Ltd.)
Flake graphite (CBR (volume-average particle size: 18 µm), manufactured by Chuetsu Graphite Works Co., Ltd.)

### <Component [B]: Amine-Based Curing Agent having Structure represented by General Formula (2)>

Bis(3-aminophenyl)phenylphosphine oxide (BAPPO, manufactured by KATAYAMA CHEMICAL INDUSTRIES Co., Ltd.)
Tris(3-aminophenyl)phosphine oxide (TAPPO, manufactured by KATAYAMA CHEMICAL INDUSTRIES Co., Ltd.) <Component [B]: Amine-Based Curing Agent having Structure represented by General Formula (3)>
Biphenylaralkyl type aromatic amine (BAN)
Biphenylaralkyl type aromatic amine (BXN) <Curing Agent other than Component [B]>
4,4'-Diaminodiphenyl sulfone (SEIKACURE-S, manufactured by Wakayama Seika Holdings Co., Ltd.).

### <Component [C]: Epoxy Resin having Structure represented by General Formula (4)>

N,N-diglycidylaniline (GAN, manufactured by Nippon Kayaku Co., Ltd.)
N,N-diglycidyl-4-phenoxyaniline (TOREP A-204E, manufactured by Toray Fine Chemicals Co., Ltd.) <Epoxy Resin other than Component [C]>
Bisphenol A type epoxy resin ("jER (registered trademark)" 825, manufactured by Mitsubishi Chemical Corporation)
N,N,N',N'-tetraglycidyl-4,4'-diaminodiphenylmethane ("Araldite (registered trademark)" MY721, manufactured by Huntsman Advanced Materials)
N,N,O-triglycidyl-p-aminophenol ("Araldite (registered trademark)" MY510, manufactured by Huntsman Advanced Materials).

### <Component [D]: Thermoplastic Resin>

Polyether sulfone ("VIRANTAGE (registered trademark)" VW-10700RFP, manufactured by Solvay Advanced Polymers)
Polyetherimide ("ULTEM (registered trademark)" EXUM9990, manufactured by SABIC Corporation)

### <Component [E]: Particles Containing Thermoplastic Resin as Main Component>

Polyamide particles ("Toraypearl (registered trademark)" TN, manufactured by Toray Industries, Inc.) <Other Components>
Red phosphorus ("NOVARED (registered trademark)" 120UF, manufactured by RIN KAGAKU KOGYO Co., Ltd.)
Carbon fiber ("TORAYCA (registered trademark)" T800SC-24K manufactured by Toray Industries, Inc.).

### (1) Method for Preparing Epoxy Resin Composition

An inorganic filler and an epoxy resin corresponding to the component [A], a thermoplastic resin corresponding to the component [D], and other additives were charged in a kneading machine in the amounts shown in Tables 1 to 4 and, after raising the temperature to 140°C or higher, the thermoplastic resin [D] was dissolved by heating and kneading. Next, the temperature of the resin composition in the kneading machine was lowered to the temperature of 80°C or lower, and the component [B] and curing agents other than the component [B] were added to the kneading machine in the amounts shown in Tables 1 to 4, followed by stirring to obtain an epoxy resin composition. When using particles containing a thermoplastic resin as a main component, as the component [E], the temperature of the resin composition in the kneading machine was lowered to the temperature of 80°C or lower, and then the resin composition was charged in the kneading machine, followed by stirring before adding the curing agent.

### (2) Evaluation of Char Generation Rate of Cured Resin

The char generation rate was measured by thermogravimetry (TGA) as follows.

The epoxy resin composition prepared in (1) was defoamed in a vacuum and then cured under predetermined curing conditions in a mold set at a thickness of 2 mm by a 2-mm thick "TEFLON (registered trademark)" spacer to obtain a cured epoxy resin having a thickness of 2 mm. The flame retardancy was evaluated using a thermogravimetric analyzer TG-DSC (STA 6000 System, manufactured by PerkinElmer, Inc.). About 10 mg of a test piece was cut out from the cured epoxy resin and the temperature was simply raised under air at a temperature rise rate of 10°C/min, and char formation rate (%) at 600°C was used as an index of the flame retardancy. The char generation rate as used herein is the value represented by (mass of thermal decomposition residue upon reaching at 600°C (g))/(mass of cured epoxy resin before measurement (g)) × 100.

### (3) Measurement of Thermal Diffusivity of Cured Resin

The thermal diffusivity was measured as follows.

The epoxy resin cured fabricated in (2) was cut into a size of 10 mm × 10 mm square, and the surface was subjected to blacking processing using Black Guard Spray (manufactured by Fine Chemical Japan Co., Ltd.) to prepare a measurement sample. In accordance with ASTM E1461-01 (2001), the thermal diffusivity of the sample at 25°C was measured using a thermal diffusivity measuring instrument LFA467HyperFlash (manufactured by NETZSCH).

### (4) Evaluation of Mechanical Properties of Cured Resin

The mechanical properties of the cured resin were evaluated as follows.

The cured epoxy resin fabricated in (2) was cut into a size of 10 mm × 60 mm square to prepare a test piece. In accordance with JIS K7171 (2006), a three-point bending test was performed on the test piece using an Instron 5565 universal testing machine (manufactured by Instron Corporation) under the conditions of a crosshead speed of 2.5 mm/min, a span length of 40 mm, an indenter diameter of 10 mm and a support diameter of 4 mm to measure the flexural modulus.

### (5) Viscosity Measurement of Epoxy Resin Composition

The viscosity of the epoxy resin composition was measured using a dynamic viscoelastometer ARES-G2 (manufactured by TA Instruments). Using flat parallel plates having a diameter of 40 mm, the epoxy resin composition was set so that the distance between the upper and lower plates would be 1 mm. After confirming that the temperature has reached 40°C, measurement was performed in torsion mode (angular frequency: 3.14 rad/s) by simply raising the temperature at a temperature rise rate of 1.5°C/min.

### (6) Flame Retardancy Evaluation of Carbon Fiber Reinforced Composite Material (Flame Propagation Test)

A composite material was fabricated by laminating three layers of UD prepreg in a [0/90/0] configuration and raising the temperature to 180°C in an autoclave at a temperature rate of 1.7°C/min under a pressure of 6 kg/cm², followed by forming at 180°C for 2 hours under a pressure of 6 kg/cm². Samples of 200 mm long × 160 mm wide (approximately 0.6 mm thick) were cut from the composite material, and then the surface burning length and damaged length on back side were determined in the case of flame contact for 50 seconds in accordance with JIS T8022 flame spread test (method A (surface ignition)).

### (Examples 1 to 14, Comparative Examples 1 to 5)

Epoxy resin compositions were prepared by the above (1) method for preparing an epoxy resin composition using the respective components in the ratios (parts by mass) shown in Tables 1 to 3. Each of the resulting epoxy resin compositions was cured at a temperature of 180°C for 2 hours, and the char generation rate and thermal diffusivity of the resulting cured resin were measured. The evaluation results are shown in Tables 1 to 3.

**[Table 1]**

| | | Example 1 | Example 2 | Example 3 | Example 4 | Example 5 | Example 6 | Example 7 |
|---|---|---|---|---|---|---|---|---|
| | Component [A] Boron Nitride or Graphite | | | | | | | |
| | Flake boron nitride (Platelets 003) | 9.5 | | 9.2 | | | | |
| | Flake graphite (BF-3AK) | | 9.5 | | 9.2 | 9.5 | 9.2 | 9 |
| | Flake graphite (CBR) | | | | | | | |
| | Component [B] phosphorus-containing amine-based curing agent or phenolaralkyl type curing agent | | | | | | | |
| | Bis(3-aminophenyl)phenylphosphine oxide (BAPPO) | 28 | 28 | 27 | 27 | 28 | 28 | 27 |
| | Tris(3-aminophenyl)phosphine oxide (TAPPO) | | | | | | | |
| | Biphenylaralkyl type aromatic amine (BAN) | | | | | | | |
| | Biphenylaralkyl type aromatic amine (BXN) | | | | | | | |
| | Curing agent other than component [B] | | | | | | | |
| | 4,4'-Diaminodiphenyl sulfone 1 | 33 | 33 | 29 | 29 | 32 | 34 | 30 |
| | Component [C] Epoxy resin having a structure represented by the general formula (4) | | | | | | | |
| Epoxy resin composition | N,N-diglycidylaniline (GAN) | 35 | 35 | | | 60 | | |
| | N,N-diglycidyl-4-phenoxyaniline (TOREP A-204E) | | | | | | 35 | 35 |
| | Epoxy resin other than component [C] | | | | | | | |
| | Bisphenol A type epoxy resin (jER825) | | | 35 | 35 | | | |
| | N,N,N',N'-tetraglycidyl-4,4'-diaminodiphenylmethane ("Araldite^{®}"MY721) | 65 | 65 | 65 | 65 | 40 | | 65 |
| | N,N,O-triglycidyl-p-aminophenol ("Araldite^{®}" MY510) | | | | | | 65 | |
| | Component [D] Thermoplastic resin | | | | | | | |
| | Polyether sulfone ("VIRANTAGE^{®}" VW-10700RFP) | 19 | 19 | 18 | 18 | 19 | 14 | |
| | Polyetherimide ("ULTEM^{®}" EXUM9990) | | | | | | | 14 |
| | Other additives | | | | | | | |
| | Red phosphorus ("NOVARED^{®}" 120UF) | | | | | | | |
| Content of phosphorus atoms in epoxy resin composition (%) | | 1.5 | 1.5 | 1.5 | 1.5 | 1.5 | 1.5 | 1.5 |
| Properties of cured resin | Char generation rate at 600°C (%) | 27 | 32 | 26 | 36 | 36 | 31 | 32 |
| | Thermal diffusivity (mm²/s) | 0.190 | 0.201 | 0.183 | 0.199 | 0.196 | 0.206 | 0.216 |
| | Flexural modulus (GPa) | 4.7 | 4.8 | 3.9 | 3.9 | 5.1 | 4.5 | 4.6 |

**[Table 2]**

| | | Example 8 | Example 9 | Example 10 | Example 11 | Example 12 | Example 13 | Example 14 |
|---|---|---|---|---|---|---|---|---|
| | Component [A] Boron Nitride or Graphite | | | | | | | |
| | Flake boron nitride (Platelets 003) | | | | | | | |
| | Flake graphite (BF-3AK) | 10 | 11 | 20 | | 10 | 10 | 8.8 |
| | Flake graphite (CBR) | | | | 9.5 | | | |
| | Component [B] Phosphorus-containing amine-based curing agent or phenolaralkyl type curing agent | | | | | | | |
| | Bis(3-aminophenyl)phenylphosphine oxide (BAPPO) | | | 30 | 28 | 77 | 29 | |
| | Tris(3-aminophenyl)phosphine oxide (TAPPO) | | | | | | | 27 |
| | Biphenylaralkyl type aromatic amine (BAN) | 79 | | | | | | |
| | Biphenylaralkyl type aromatic amine (BXN) | | 84 | | | | | |
| | Curing agent other than component [B] | | | | | | | |
| | 4,4'-Diaminodiphenyl sulfone | | | 32 | 33 | | 34.5 | 22 |
| | Component [C] Epoxy resin having a structure represented by the general formula (4) | | | | | | | |
| Epoxy resin composition | N,N-diglycidylaniline (GAN) | | | 35 | 35 | 35 | 10 | 35 |
| | N,N-diglycidyl-4-phenoxyaniline (TOREP A-204E) | 35 | 35 | | | | | |
| | Epoxy resin other than component [C] | | | | | | | |
| | Bisphenol A type epoxy resin (jER825) | | | | | | | |
| | N,N,N',N'-tetraglycidyl-4,4'-diaminodiphenylmethane ("Araldite^{®}" MY721) | 65 | 65 | 65 | 65 | 65 | 90 | 65 |
| | N,N,O-triglycidyl-p-aminophenol ("Araldite^{®}" MY510) | | | | | | | |
| | Component [D] Thermoplastic resin | | | | | | | |
| | Polyether sulfone ("VIRANTAGE^{®}" VW-10700RFP) | 15 | 16 | 20 | 19 | 21 | 19 | 18 |
| | Polyetherimide ("ULTEM^{®}" EXUM9990) | | | | | | | |
| | Other additives | | | | | | | |
| | Red phosphorus ("NOVARED^{®}" 120UF) | | | | | | | |
| Content of phosphorus atoms in epoxy resin composition (%) | | 0 | 0 | 1.5 | 1.5 | 3.8 | 1.5 | 1.5 |
| Properties of cured resin | Char generation rate at 600°C (%) | 23 | 26 | 32 | 31 | 38 | 37 | 32 |
| | Thermal diffusivity (mm²/s) | 0.205 | 0.208 | 0.254 | 0.194 | 0.179 | 0.186 | 0.191 |
| | Flexural modulus (GPa) | 4.6 | 3.6 | 5.3 | 4.6 | 5.0 | 4.4 | 5.0 |

**[Table 3]**

| | | Comparative Example 1 | Comparative Example 2 | Comparative Example 3 | Comparative Example 4 | Comparative Example 5 |
|---|---|---|---|---|---|---|
| | Component [A] Boron Nitride or Graphite | | | | | |
| | Flake boron nitride (Platelets 003) | | | 9.2 | | |
| | Flake graphite (BF-3AK) | | 9 | | | 10 |
| | Flake graphite (CBR) | | | | | |
| | Component [B] Phosphorus-containing amine-based curing agent or phenolaralkyl type curing agent | | | | | |
| | Bis(3-aminophenyl)phenylphosphine oxide (BAPPO) | 28 | | | | |
| | Biphenylaralkyl type aromatic amine (BAN) | | | | | 77 |
| | Biphenylaralkyl type aromatic amine (BXN) | | | | 84 | |
| | Curing agent other than component [B] | | | | | |
| | 4,4'-Diaminodiphenyl sulfone | 33 | 53 | 53 | | |
| Epoxy resin composition | Component [C] Epoxy resin having a structure represented by the general formula (4) | | | | | |
| | N,N-diglycidylaniline (GAN) | 35 | 35 | 35 | 35 | |
| | N,N-diglycidyl-4-phenoxyaniline (TOREP A-204E) | | | | | |
| | Epoxy resin other than component [C] | | | | | |
| | Bisphenol A type epoxy resin (jER825) | | | | | 35 |
| | N,N,N',N'-tetraglycidyl-4,4'-diaminodiphenylmethane ("Araldite^{®}" MY721) | 65 | 65 | 65 | 65 | 65 |
| | N,N,O-triglycidyl-p-aminophenol ("Araldite^{®}" MY510) | | | | | |
| | Component [D] Thermoplastic resin | | | | | |
| | Polyether sulfone ("VIRANTAGE^{®}" VW-10700RFP) | 18 | 18 | 18.5 | 20 | 15 |
| | Polyetherimide ("ULTEM^{®}" EXUM9990) | | | | | |
| | Other additives | | | | | |
| | Red phosphorus ("NOVARED^{®}" 120UF) | | | 3.6 | | |
| Content of phosphorus atoms in epoxy resin composition (%) | | 1.5 | 0 | 1.5 | 0 | 0 |
| Properties of cured resin | Char generation rate at 600°C (%) | 29 | 18 | 17 | 23 | 35 |
| | Thermal diffusivity (mm²/s) | 0.148 | 0.214 | 0.200 | 0.158 | 0.116 |
| | Flexural modulus (GPa) | 4.4 | 4.6 | 4.6 | 3.2 | 3.5 |

### (Example 15)

In a kneading machine, 9.5 parts by mass of flake graphite (component [A]), 35 parts by mass of N,N-diglycidylaniline (GAN) (component [C]), 65 parts by mass of tetraglycidyldiaminodiphenylmethane (epoxy resin other than component [C]) and 19 parts by mass of "VIRANTAGE (registered trademark)" VW-10700RFP (component [D]) were kneaded and dissolved, and then 28 parts by mass of bis(3-aminophenyl)phenylphosphine oxide (BAPPO) (component [B]) and 33 parts by mass of 4,4'-diaminodiphenyl sulfone were added, followed by kneading to fabricate a primary resin composition. This primary resin composition does not include particles containing a thermoplastic resin as a main component (component [E]). The resulting primary resin composition had a viscosity of 15.5 Pa·s at 80°C. The resulting primary resin composition was coated on a release paper using a knife coater to fabricate a primary resin film with a resin basis weight of 29 g/m². This primary resin film was set in a prepreg making machine, and then superimposed on both sides of unidirectionally aligned carbon fibers (basis weight of 190 g/m²), followed by impregnation with the primary resin composition to obtain a primary prepreg. Next, a secondary resin composition was prepared by adding "Toraypearl (registered trademark)" TN (particles containing a thermoplastic resin as a main component (component [E])) to the primary resin composition so that the epoxy resin composition of the final prepreg would be the mixing amount shown in Table 4. The secondary resin composition was coated on a release paper using a knife coater to fabricate a secondary resin film with a resin basis weight of 20 g/m². This secondary resin film was superimposed on both sides of the primary prepreg to obtain the final prepreg. The surface burning length and damaged length on back side of the resulting prepreg were measured according to the method mentioned in (6) Flame Retardancy Evaluation of Carbon Fiber Reinforced Composite Material (Flame Propagation Test). The results are shown in Table 4.

The char generation rate and thermal diffusivity of the cured resin were also measured according to the above-mentioned methods. The results are shown in Table 4.

### (Comparative Example 6)

A prepreg was fabricated in the same manner as in Example 15, except that the mixing amount of flake graphite (component [A]) was set at 0 part by mass, and the composition shown in Table 4 was used so that % by mass of "Toraypearl (registered trademark)" TN (particles containing a thermoplastic resin as a main component (component [E])) and % by mass of "VIR_ANTAGE (registered trademark)" VW-10700RFP (component [D]) in the entire resin composition would be constant. The surface burning length and damaged length on back side of the resulting prepreg were measured according to the method mentioned in (6) Flame Retardancy Evaluation of Carbon Fiber Reinforced Composite Material (Flame Propagation Test). The results are shown in Table 4.

The char generation rate and thermal diffusivity of the cured resin were also measured according to the above-mentioned methods. The results are shown in Table 4.

### (Comparative Example 7)

A prepreg was fabricated in the same manner as in Example 15, except that the composition shown in Table 4 was used so that the mixing amount of bis(3-aminophenyl)phenylphosphine oxide (BAPPO) (component [B]) in Example 15 was set at 0 part by mass, % by mass of flake graphite (component [A]), % by mass of "Toraypearl (registered trademark)" TN (particles containing a thermoplastic resin as a main component (component [E])) and % by mass of "VIR_ANTAGE (registered trademark)" VW-10700RFP (component [D]) in the entire resin composition would be constant, and the ratio H/E of the number of mols of active hydrogen in the curing agent (H) to the number of mols of epoxy groups in the epoxy resin (E) would be constant. The resulting primary resin composition had a viscosity of 9.1 Pa·s at 80°C. The surface burning length and damaged length on back side of the obtained prepreg were measured according to the method mentioned in (6) Flame Retardancy Evaluation of Carbon Fiber Reinforced Composite Material (Flame Propagation Test). The results are shown in Table 4.

The char generation rate and thermal diffusivity of the cured resin were also measured according to the above-mentioned methods. The results are shown in Table 4.

**[Table 4]**

| | | Example 15 | Comparative Example 6 | Comparative Example 7 |
|---|---|---|---|---|
| | Component [A] Boron Nitride or Graphite | | | |
| | Flake boron nitride (Platelets 003) | | | |
| | Flake graphite (BF-3AK) | 9.5 | | 9 |
| | Flake graphite (CBR) | | | |
| | Component [B] Phosphorus-containing amine-based curing agent or phenolaralkyl type curing agent | | | |
| | Bis(3-aminophenyl)phenylphosphine oxide (BAPPO) | 28 | 28 | |
| | Tris(3-aminophenyl)phosphine oxide (TAPPO) | | | |
| | Biphenylaralkyl type aromatic amine (BAN) | | | |
| | Biphenylaralkyl type aromatic amine (BXN) | | | |
| | Curing agent other than component [B] | | | |
| | 4,4'-Diaminodiphenyl sulfone | 33 | 33 | 53 |
| | Component [C] Epoxy resin having a structure represented by the general formula (4) | | | |
| Epoxy resin composition | N,N-diglycidylaniline (GAN) | 35 | 35 | 35 |
| | N,N-diglycidyl-4-phenoxyaniline (TOREP A-204E) | | | |
| | Epoxy resin other than component [C] | | | |
| | Bisphenol A type epoxy resin (jER825) | | | |
| | N,N,N',N'-tetraglycidyl-4,4'-diaminodiphenylmethane ("Araldite^{®}" MY721) | 65 | 65 | 65 |
| | N,N,O-triglycidyl-p-aminophenol ("Araldite^{®}" MY510) | | | |
| | Component [D] Thermoplastic resin | | | |
| | Polyether sulfone ("VIRANTAGE^{®}" VW-10700RFP) | 19 | 18 | 18 |
| | Polyetherimide ("ULTEM^{®}" EXUM9990) | | | |
| | Particles containing component [E] thermoplastic resin as main component | | | |
| | Polyamide particles ("Toraypearl^{®}" TN) | 12 | 12 | \| 12 |
| | Other additives | | | |
| | Red phosphorus ("NOVARED^{®}" 120UF) | | | |
| Content of phosphorus atoms in epoxy resin composition (%) | | 1.5 | 1.5 | 0 |
| Properties of cured resin | Char generation rate at 600°C (%) | 34 | 27 | 17 |
| | Thermal diffusivity (mm²/s) | 0.191 | 0.163 | 0.203 |
| Properties of fiber reinforced composite material | Plate thickness (mm) | 0.585 | 0.587 | 0.582 |
| | Surface burning length in flame propagation test (mm) | 46 | 44 | 52 |
| | Damaged length on back side in flame propagation test (mm) | 56 | 71 | 68 |

## Claims

1. A resin composition comprising an epoxy resin, wherein
a cured resin obtained by curing the epoxy resin composition at a temperature of 180°C for 2 hours exhibits:
a thermal diffusivity at 25°C as measured in accordance with ASTM E1461-01(2001) of 0.17 mm²/s or more and less than 0.30 mm²/s, and
a char generation rate at 600°C under air of 20% or more and less than 50%.

2. The epoxy resin composition according to claim 1, comprising, as a component [A], an inorganic filler made of boron nitride or graphite.

3. The epoxy resin composition according to claim 2, wherein the component [A] is an inorganic filler made of graphite.

4. The epoxy resin composition according to any one of claims 1 to 3, comprising, as a component [B], at least one amine-based curing agent selected from the group consisting of an amine-based curing agent having a structure represented by the general formula (1), an amine-based curing agent having a structure represented by the general formula (2) and an amine-based curing agent having a structure represented by the general formula (3): 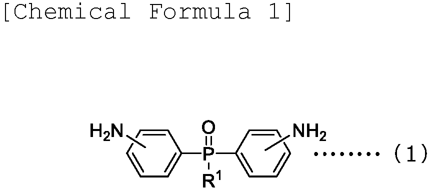
wherein, in the general formula (1), R¹ represents a hydrocarbon group having 1 to 4 carbon atoms: 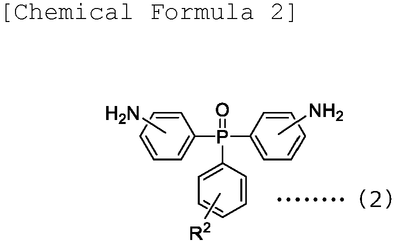
wherein, in the general formula (2), R² represents a hydrogen atom or an amino group, and: 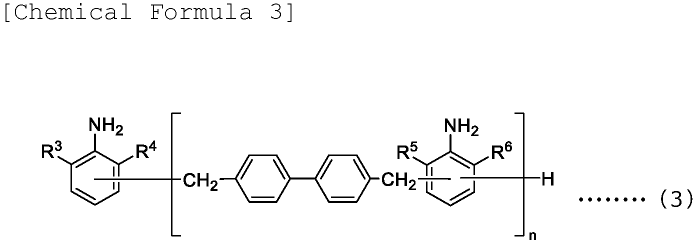
wherein, in the general formula (3), R³ to R⁶ each represent one selected from a hydrogen atom and an aliphatic hydrocarbon group having 1 to 4 carbon atoms, and n represents 1 to 4.

5. The epoxy resin composition according to any one of claims 1 to 4, further comprising a component [C]: a bifunctional glycidyl amine type epoxy resin.

6. The epoxy resin composition according to claim 5, wherein the component [C] has a structure represented by the following general formula (4): 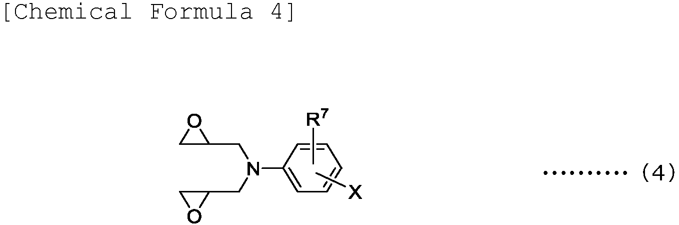 wherein, in the general formula (4), R⁷ represents one selected from a hydrogen atom, a hydrocarbon group having 1 to 4 carbon atoms, a halogen atom, an acyl group, a trifluoromethyl group and a nitro group; and X represents a hydrogen atom, or a substituent having a four- or more-membered ring structure.

7. The epoxy resin composition according to claim 5 or 6, wherein the content of the component [C] is 10 to 60 parts by mass based on 100 parts by mass of the total amount of the epoxy resin.

8. The epoxy resin composition according to any one of claims 1 to 7, further comprising, as a component [D], a thermoplastic resin.

9. The epoxy resin composition according to any one of claims 1 to 8, further comprising, as a component [E], particles containing a thermoplastic resin as a main component.

10. A prepreg obtained by impregnating a reinforcing fiber with the epoxy resin composition according to any one of claims 1 to 9.

11. A fiber reinforced composite material obtained by curing the prepreg according to claim 10.

12. A fiber reinforced composite material comprising a cured resin obtained by curing the epoxy resin composition according to any one of claims 1 to 9, and a reinforcing fiber.

13. A fiber reinforced composite material comprising a cured epoxy resin and a reinforcing fiber, wherein
a thermal diffusivity at 25°C as measured in accordance with ASTM E1461-01(2001) of the cured resin is 0.17 mm²/s or more and less than 0.30 mm²/s,
a char generation rate at 600°C under air is 20% or more and less than 50% epoxy resin composition, and
the fiber reinforced composite material has a thickness of 0.5 mm or more and less than 2 mm.

14. The fiber reinforced composite material according to claim 13, wherein the cured epoxy resin comprises, as the component [A], an inorganic filler made of boron nitride or graphite.

15. The fiber reinforced composite material according to claim 14, wherein the cured epoxy resin is obtained from an epoxy resin composition comprising, as the component [B], at least one amine-based curing agent selected from the group consisting of an amine-based curing agent having a structure represented by the general formula (1), an amine-based curing agent having a structure represented by the general formula (2) and an amine-based curing agent having a structure represented by the general formula (3).

16. The fiber reinforced composite material according to any one of claims 13 to 15, wherein a surface burning length in a JIS T8022 flame propagation test (Method A (surface ignition), flame contact for 50 seconds) is 10 mm or more and less than 50 mm, and a damaged length on back side is 10 mm or more and less than 60 mm.
